Europäisches Patentamt

European Patent Office

Office européen des brevets

(19)

(11) Veröffentlichungsnummer: **0 327 713**
**A2**

(12) **EUROPÄISCHE PATENTANMELDUNG**

(21) Anmeldenummer: 88121160.1

(51) Int. Cl.⁴: **G21F 5/00**

(22) Anmeldetag: 16.12.88

(30) Priorität: 11.02.88 DE 3804276

(43) Veröffentlichungstag der Anmeldung:
16.08.89 Patentblatt 89/33

(84) Benannte Vertragsstaaten:
BE CH DE ES FR GB LI SE

(71) Anmelder: Deutsche Gesellschaft für
Wiederaufarbeitung von Kernbrennstoffen
mbH
Hamburger Allee 4 Postfach 1407
D-3000 Hannover 1(DE)

(72) Erfinder: Popp, Franz-Wolfgang, Dr.
Kuhstrasse 5
D-3002 Wedemark(DE)
Erfinder: Krammer, Erwin
Finkenweg 1
D-3155 Edemissen/Abbensen(DE)
Erfinder: Genannt, Wolfgang
Helmut-Thiele-Strasse 3b
D-3100 Celle(DE)
Erfinder: Flehr, Dietmar, Dr.
Stauffenbergstrasse 14
D-3100 Celle(DE)

(74) Vertreter: von Bülow, Tam, Dipl.-Ing.,
Dipl.-Wirtsch.-Ing. et al
SAMSON & BÜLOW Widenmayerstrasse 5
D-8000 München 22(DE)

(54) Vorrichtung zum Verschrauben zweier Komponenten, die hohes Gewicht und eine gemeinsame vertikale Achse haben, insbesondere zum Verschrauben eines Deckels mit einem Behälter zum Transport und/oder zur Lagerung von radioaktiven Stoffen.

(57) Das Verschrauben von schweren Deckeln (4) auf dickwandige Behälter (5) muß sehr feinfühlig vorgenommen werden, um Beschädigungen der Gewinde (16,17) zu vermeiden. Eine Vorrichtung zum Verschrauben besteht aus einem feststehenden Teil (1), das sich auf dem Behälter (5) zentriert und aus einer axial beweglichen Plattform (2) die so geführt ist, daß Drehmomente übertragen werden können und die gemeinsame Achse (12) stets erhalten bleibt. In vertikaler Richtung übertragen federnde, längenveränderbare Elemente (7) exakt die Gewichtskräfte auf das feststehende Teil (1) und verhindern Zusatzkräfte auf die Gewindeflanken.

Fig.1

# Vorrichtung zum Verschrauben zweier Komponenten, die hohes Gewicht und eine gemeinsame vertikale Achse haben, insbesondere zum Verschrauben eines Deckels an einem Behälter zum Transport und/oder zur Lagerung von radioaktiven Stoffen

Die Erfindung bezieht sich auf eine Vorrichtung gemäß dem Oberbegriff des Patentanspruches 1.

Dickwandige Behälter mit einem lichten Durchmesser von mehr als 1 m werden üblicherweise durch einen Deckel und kreisförmig angeordnete Schraubbolzen verschlossen. Zur gleichmässigeren Kräfteübertragung zwischen Deckel und Behälter ist es jedoch zweckmäßig zwischen Deckel und Behälter ein Gewinde vorzusehen, wie es beispielsweise bei dem Doppelbehälter zum Transport und zur Lagerung von radioaktiven Stoffen gemäß der DE-PS 36 20 737 bekannt ist. Da der Deckel entsprechend der Wandstärke des Behälters sehr schwer ist (er kann mehrere hundert kg wiegen) und da das Gewinde einen sehr großen Durchmesser (ca. 1 m oder größer) hat, muß die Verschraubung sehr feinfühlig vorgenommen werden. Dies erfordert, daß der Deckel mittig in dem Gewinde geführt wird und auf keinen Fall verkantet. Weiterhin muß die erste Berührung der Gewindeflanken stoßfrei geschehen. Schließlich darf während des Verschraubvorganges der Deckel nicht mit seinem vollen Eigengewicht auf den Gewindeflanken aufliegen, da durch das hohe Gewicht und die damit verursachte hohe Reibung Beschädigungen des Gewindes auftreten würden. Generell tritt diese Problematik überall dort auf, wo eine mit einem Gewinde versehene Komponente mit sehr hohem Gewicht in eine andere Komponente eingeschraubt werden soll.

Bisher wurden schwere Deckel lediglich mit einem Kran gehalten und geführt. Die beschriebenen Probleme waren daher keinesfalls gelöst.

Aufgabe der Erfindung ist es daher, eine Vorrichtung der eingangs genannten Art zu schaffen mit der ein Verschrauben der beiden Komponenten trotz hohen Gewichts einwandfrei und ohne die Gefahr einer Beschädigung des Gewindes durchführbar ist.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung besteht darin, daß die eine Komponente (Deckel) durch längenveränderbare und federnde Elemente gegenüber der anderen Komponente (Behälter) zentriert gehalten wird, wobei diese längenveränderbaren Elemente eine sehr feinfühlige Absenkbewegung zulassen, welche in SO Abhängigkeit von der Steigung des Gewindes und der Schraubgeschwindigkeit auftritt, ohne daß dabei unzulässig hohe Kräfte (Druck- oder Reibungskräfte) zwischen den Gewindeflanken auftreten.

Gemäß Anspruch 2 besteht diese Vorrichtung im wesentlichen aus zwei Grundelementen, einem feststehenden Teil, das sich an der einen Komponente (Behälter) drehfest abstützt und an dieser zentriert sowie einer mit diesem feststehenden Teil gekoppelten Plattform, welche die beim Einschrauben auftretende "Zustellbewegung" durchführt. Das feststehende Teil zentriert sich - wie gesagt - selbst auf dem Behälter und damit auch mittig zu dem Gewinde. Das beim Einschrauben auftretende Drehmoment kann vorteilhafterweise über nach unten reichende Arme und am Behälter angebrachte Tragzapfen übertragen werden. Die Plattform bewegt sich gegenüber dem feststehenden Teil im wesentlichen nur axial. Die Abstützung der Plattform, die während des Einschraubens den schweren Deckel trägt, erfolgt in vertikaler Richtung durch die längenveränderbaren Elemente. Eine Drehmomentabstützung der Plattform sowie die Zentrierung der Plattform gegenüber dem feststehenden Teil kann über Rollen erfolgen, vorzugsweise jedoch über Gelenkstangen, die mit ihren jeweiligen Enden einerseits gelenkig an dem feststehenden Teil und andererseits gelenkig an der Plattform befestigt sind. Für eine stabile Lagerung verwendet man hierbei vorzugsweise drei je um 120° versetzt angeordnete Gelenkstangen. Diese können damit das Drehmoment zwischen der Plattform und dem feststehenden Teil übertragen und sorgen gleichzeitig stets für eine einwandfreie Zentrierung der Plattform gegenüber dem feststehenden Teil. Eine Bewegung der Plattform in vertikaler Richtung erfolgt über die längenveränderbaren Elemente, die vorzugsweise Druckluftzylinder oder - zur weiteren Verringerung der Reibung - Gasfederbälge sind. Durch Regelung des Druckes in den Gasfederbälgen kann das Gewicht des Deckels der Plattform und der weiteren daran hängenden Komponenten kompensiert werden. Durch geringfügige Veränderung dieses "Kompensationsdruckes" kann der Deckel sehr feinfühlig abgesenkt oder angehoben werden. Regelt man den Druck innerhalb eines engen Schwellwertbereiches um diesen Kompensationsdruck, so lassen sich die auf die Gewindeflanken wirkenden Kräfte in engen Grenzen sehr klein halten. Erfolgt beispielsweise das Eindrehen des Deckels schneller, als es im Zusammenhang mit der Gewindesteigung der momentan durchgeführten Absenkgeschwindigkeit entspricht, so werden zwischen den Gewindeflanken Kräfte auftreten, die sich unmittelbar in einem Ansteigen des Druckes der Gasfederbälge auswirken.

Durch ein Absenken des Druckes kann in diesem Fall sehr feinfühlig und schnell dieser "Fehler" behoben werden. Durch entsprechende Regelung des Druckes kann man also erreichen, daß während des Verschraubens keine Gewichtskräfte des Dekkels auf die Gewindeflanken wirken.

Der Deckel selbst wird über eine Aufnahme gegenüber der Plattform drehbar gehalten. Diese Aufnahme ist durch einen Kugeldrehkranz, der das hohe Gewicht des Deckels tragen kann, an die Plattform gekoppelt. Der Drehantrieb erfolgt stufenlos in beiden Richtungen über einen stufenlos regelbaren Elektromotor und eine Zahnkranzverbindung, wie sie im Kranbau bekannt ist.

Die Kraftangriffspunkte zwischen den längenveränderbaren Elementen und der Plattform liegen oberhalb des Gesamtschwerpunktes von Deckel und Plattform, so daß sich die Lage der Plattform stets selbst zentriert.

Mit dieser Vorrichtung können also selbst sehr schwere Deckel vollautomatisch verschraubt werden. Ein bevorzugtes Anwendungsgebiet der Erfindung ist - wie oben erwähnt - die Verschraubung von Deckeln bei Behältern zum Transport und zur Lagerung von radioaktiven Stoffen. Selbstverständlich kann die Erfindung auch zum Verschrauben von schweren Rohren eingesetzt werden und generell überall dort, wo eine sehr schwere und oftmals auch sperrige Komponente in eine andere Komponente eingeschraubt werden soll.

Im folgenden wird die Erfindung anhand eines Ausführungsbeispieles im Zusammenhang mit der Zeichnung ausführlicher erläutert. Es zeigt:

Fig.1 Einen schematischen Längsschnitt der Vorrichtung im Einsatz; und

Fig.2 eine Draufsicht auf die Vorrichtung zur Verdeutlichung der Anordnung der Gelenkstangen.

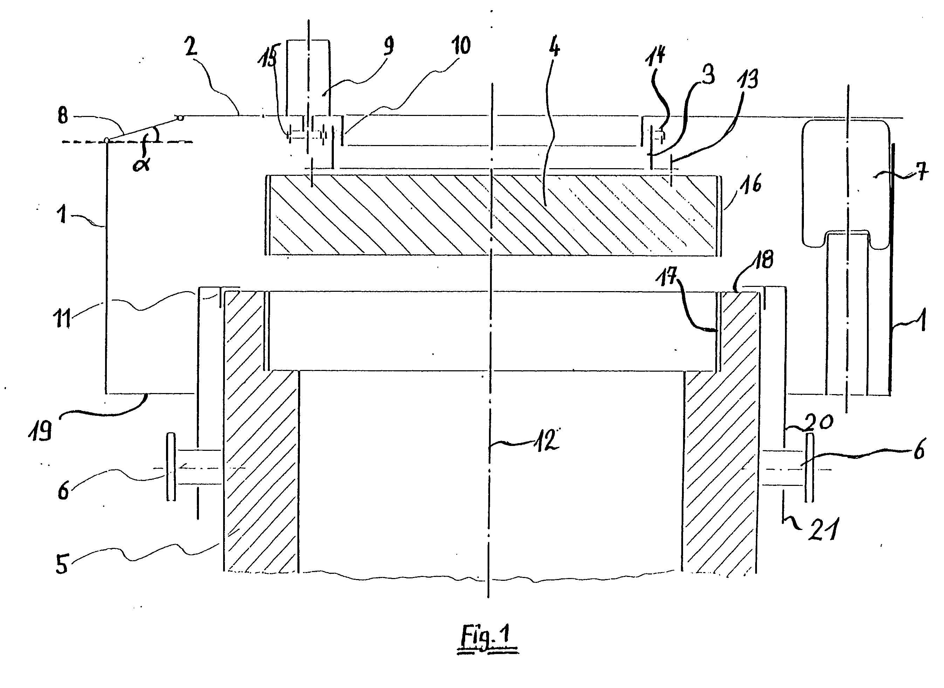

Das Ausführungsbeispiel der Fig.1 bezieht sich auf das Ein schrauben eines scheibenförmigen Deckels 4 in die Stirnseite eines zylindrischen Behälters 5. Die Vorrichtung nach der Erfindung besitzt ein gegenüber dem Behälter 5 feststehendes Vorrichtungsteil 1, das gegenüber der Achse 12 des Behälters präzise zentriert und drehfest an den Behälter 5 gekoppelt ist, so daß durch diese drehfeste Verbindung die zum Einschrauben des Dekkels benötigten Drehmomente übertragen werden können. Das feststehende Teil 1 ist im wesentlichen zylindrisch aufgebaut, wobei in der Prinzipskizze der Fig.1 der untere Rand des Zylinders fest mit einem scheibenförmigen Teil 19 verbunden ist, dessen innerer Rand mit einem Kopplungsteil 20 verbunden ist, das wiederum zylindrisch ist und koaxial zur Achse 12 liegt. Dieses Kopplungsteil 20 hat an seinem oberen Ende eine Zentriereinrichtung 11, die sich an der oberen, radial äußeren Kante des Behälters abstützt und die gesamte Vorrichtung gegenüber dem Behälter zentriert.

Am unteren Ende des Kopplungsteiles 20 sind Klauen 21 angebracht, die über radial auskragende Tragzapfen 6 des Behälters greifen und somit dafür sorgen, daß die Vorrichtung gegenüber dem Behälter nicht um die Achse 12 gedreht werden kann, womit die Übertragung der für das Einschrauben erforderlichen Drehmomente gesichert ist.

Im Bereich des oberen Endes des feststehenden Teiles 1 ist eine in Richtung der Achse 12 bewegbare Plattform 2 vorgesehen. Diese Plattform ist ebenfalls präzise gegenüber der Achse 12 zentriert, d.h. eine auf ihrem Mittelpunkt errichtete senkrechte Linie fluchtet präzise mit der Achse 12. Die Plattform ist jedoch in Richtung der Achse 12 gegenüber dem feststehenden Teil 1 bewegbar. An dieser Plattform ist eine Aufnahme 3 befestigt, welche den einzuschraubenden Deckel 4 trägt. Dieser Deckel kann beispielsweise mit Schraubbolzen 13 an der Aufnahme angebracht werden. Die Aufnahme 3 ist mittels eines Kugeldrehkranzes 10 an der Plattform gehalten, wobei die Drehachse des Kugeldrehkranzes präzise mit der Achse 12 des Behälters übereinstimmt. Nebenbei sei erwähnt, daß der Kugeldrehkranz so ausgelegt ist, daß er in Achsrichtung das volle Gewicht des Deckels 4 aufnehmen kann. Im Bereich des Kugeldrehkranzes besitzt die Aufnahme 3 einen Zahnkranz 14, der mit einem Ritzel 15 eines stufenlosen Drehantriebes 9 zusammenwirkt, wobei dieser Drehantrieb 9 starr an der Plattform 2 befestigt ist. Mit dieser Konstruktion läßt sich also die Deckelaufnahme 3 samt Deckel 4 gegenüber der Plattform 2 drehen.

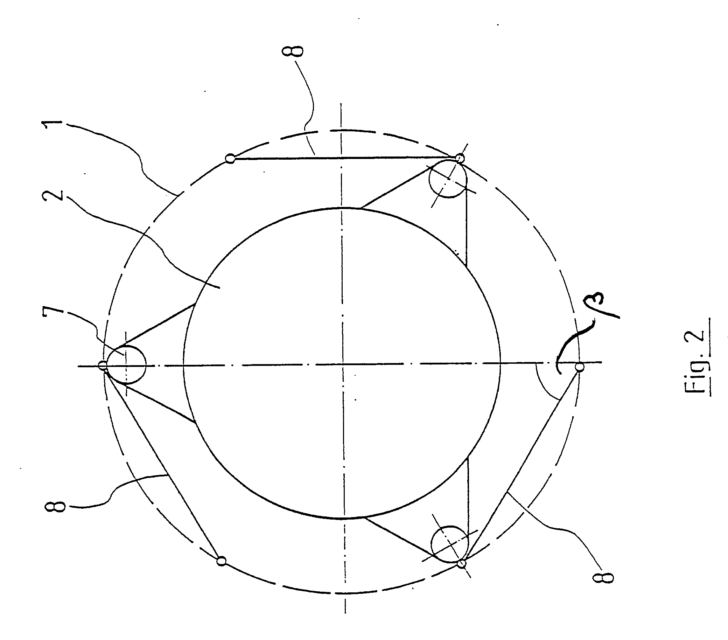

Die axiale Beweglichkeit zwischen Vorrichtungsteil 1 und Plattform 2 erhält man durch längenveränderbare Elemente, die im dargestellten Ausführungsbeispiel Gasfederbälge 7 sind. Wie aus Fig.2 zu erkennen, werden hier drei jeweils um 120° versetzt angeordnete Gasfederbälge verwendet. Durch Erhöhen oder Absenken des Druckes der Gasfederbälge 7 kann die Plattform 2 also gegenüber dem Vorrichtungsteil 1 abgesenkt oder angehoben werden.

Damit die Plattform einerseits stets gegenüber der Achse 12 zentriert ist und andererseits auch die für das Einschrauben erforderliche Drehmomentabstützung erfährt, ist die Plattform 2 an das Vorrichtungsteil 1 mittels mehrerer Gelenkstangen 8 gekoppelt. Diese Gelenkstangen sind über reibungsarme Universalgelenke mit ihrem einen Ende an dem Vorrichtungsteil und mit ihrem anderen Ende an der Plattform befestigt. Wie aus Fig.2 zu erkennen, sind drei Gelenkstangen vorgesehen, die in gleichmäßigen Abständen, d.h. um 120° versetzt längs des Umfanges von Plattform 2 und Vorrichtungsteil 1 angeordnet sind.

Wie aus Fig. 1 zu erkennen, nehmen die Gelenkstangen 8 gegenüber einer horizontalen Linie einen Winkel α ein, der in Abhängigkeit vom Ein- oder Ausfahren der Plattform veränderbar ist. Da die Gelenkstangen 8 in sich starr sind, ist ein axiales Verschieben der Plattform 2 ohne Längenänderung der Stangen 8 nur möglich, wenn diese in der Draufsicht der Fig.2 auch den Winkel β zwischen ihrem Befestigungspunkt an dem Vorrichtungsteil 1 und einer von dort zum Mittelpunkt (Achse 12) verlaufenden Linie verändern, womit sich die Plattform 2 in gewissem Umfange dreht, wenn sich die Plattform verschiebt.

Im Prinzip wäre es natürlich auch möglich, wie in der Beschreibungseinleitung angeschnitten, die Zentrierung und axiale Führung der Plattform 2 gegenüber dem Vorrichtungsteil 1 durch Rollen zu gestalten, die in Führungsbahnen laufen, welche an der Innenseite des Vorrichtungsteiles 1 parallel zur Achse 12 verlaufen.

Unabhängig von der speziellen konstruktiven Ausgestaltung der Kopplung zwischen Plattform 2 und Vorrichtungsteil 1 muß darauf geachtet werden, daß folgende beide Forderungen immer erfüllt sind: In allen Betriebslagen muß die Plattform 2 gegenüber dem Vorrichtungsteil 1 zentriert sein und die Drehmomentabstützung zwischen Plattform 2 und Vorrichtungsteil 1 muß gewährleistet sein. Unter Zentrierung versteht man hier, daß die Drehachse des Kugeldrehkranzes exakt mit der Achse 12 ausgefluchtet ist, daß also weder ein Mittenversatz noch ein Kippwinkel vorhanden sind. (Natürlich muß auch der Behälter bei dem Ausführungsbeispiel der Erfindung senkrecht stehen.)

Zum Ein- und Ausschrauben des Deckels 4 stellt man den Druck in den Gasfederbälgen 7 zunächst auf einen Basiswert ein, welcher gerade das Gewicht von Deckel 4 und Plattform 2 samt den daran hängenden Komponenten kompensiert. Durch geringfügiges Absenken des Druckes kann dann die Plattform 2 sehr langsam und feinfühlig abgesenkt werden, bis die untere Gewindeflanke des Außengewindes 16 des Deckels 4 mit der oberen Gewindeflanke des Innengewindes 17 des Behälters 5 in ersten Kontakt kommt. Diese Berührung wird sich sofort in einer Druckänderung bemerkbar machen, da ja die Gewindeflanken dann Kräfte aufnehmen und die Gasfederbälge etwas entlasten. Begrenzt man den Wert des Differenzdruckes, um den der Druck in den Gasfederbälgen 7 von dem stationären Bezugsdruck abweichen darf, so kann man damit in sehr einfacher Weise auch die Belastung der Gewindeflanken begrenzen. Beginnt man nun aus dieser Stellung heraus den stufenlosen Drehantrieb 9 in Gang zu setzen, so dreht sich der Deckel in den Behälter ein. Durch die Gewindesteigung wird er sich dabei weiter absenken, was zunächst zu einer Druckerhöhung in den Gasfederbälgen 7 führt, da die Gewindeflanken ja wieder entlastet werden. Der Druck steigt dann sogar über den stationären Bezugsdruck an, da beim weiteren Einschrauben (ohne gleichzeitige Absenkung) die nach oben gerichteten Flanken des Gewindes des Deckels an den nach unten gerichteten Flanken des Gewindes des Behälters zur Anlage kommen. Begrenzt man auch diesen oberen Druckwert und senkt bei Erreichen dieses oberen Druckwertes den Druck in den Gasfederbälgen 7 wieder ab, so läßt sich mit einer einfachen Zweipunktdruckregelung erreichen, daß die in axialer Richtung auf das Gewinde wirkenden Kräfte innerhalb vorgegebener Grenzwerte gehalten werden, wobei dies unabhängig von der Drehgeschwindigkeit des Drehantriebes 9 erhalten wird, wenn man lediglich den Druck regelt. Grundsätzlich könnte man den Druck in den einzelnen Gasfederbälgen 7 separat regeln. Einfacher ist es jedoch, wenn man die Speiseleitungen zu den Gasfederbälgen miteinander verbindet und nur einem einzigen Regelventil zuführt. Damit wird sichergestellt, daß in allen vorhandenen Gasfederbälgen stets der gleiche Druck herrscht, so daß ein Kippen bzw. Verkanten praktisch ausgeschlossen ist.

Verwendet man für die längenveränderlichen Elemente mit Gas beaufschlagte Federbälge oder Zylinder, so hat man zwangsläufig durch die Kompressibilität des Mediums auch Federeigenschaften, die für ein einwandfreies Funktionieren der Vorrichtung erforderlich sind. Diese Federeigenschaften lassen sich natürlich auch in anderer Weise realisieren, bei Verwendung von Hydraulikzylindern beispielsweise durch Einschalten von federelastischenden Elementen in den Hydraulikkreis. Auch können theoretisch statt der Kolbenanordnungen Elektromotoren mit Spindelantrieben verwendet werden, wobei deren Ankopplung an eines der beiden Teile 1 oder 2 mit federelastischen Elementen erfolgt.

## Ansprüche

1. Vorrichtung zum Verschrauben zweier Komponenten, die hohes Gewicht und eine gemeinsame vertikale Achse haben, insbesondere zum Verschrauben eines Deckels mit einem Behälter zum Transport und/oder zur Lagerung von radioaktiven Stoffen, gekennzeichnet durch
- längenveränderbare und federnde Elemente (7), welche die eine Komponente (4) gegenüber der anderen Komponente (5) in veränderbarem Abstand halten,
- einen Drehantrieb (9) zum Drehen der einen Komponente (4) gegenüber der anderen Komponente (5),
- wobei die Elemente (7) derart längenveränderbar sind, daß in axialer Richtung (12) zwischen den beiden Komponenten (4,5) wirkende Kräfte stets unterhalb eines vorgegebenen Grenzwertes sind.

2. Vorrichtung nach Anspruch 1, gekennzeichnet durch
- ein feststehendes Teil (1), das auf einer Komponente (5) zentriert und an dieser drehsicher gehalten ist,
- eine längs der Achse (12) verschiebbare Plattform (2), an welcher eine Komponente (4) während des Verschraubens so befestigt ist, daß sie gegenüber der Plattform (2) um die vertikale Achse (12) drehbar ist.
- wobei sich die Plattform (2) mittels der längenveränderbaren Elemente (7) in vertikaler Richtung gegenüber dem feststehenden Teil (1) abstützt.

3. Vorrichtung nach Anspruch 2, dadurch gekennzeichnet, daß die Plattform (2) und das feststehende Teil (1) zusätzlich über eine Drehmomentabstützung sicherstellende Lagereinrichtung (8) gekoppelt sind, welche eine vertikale Bewegung zuläßt und eine Zentrierung zwischen der Plattform (2) und dem feststehenden Teil (1) sicherstellt.

4. Vorrichtung nach Anspruch 3, dadurch gekennzeichnet, daß die Lagereinrichtung (8) aus mehreren, vorzugsweise drei Gelenkstangen (8) besteht, die längs des Umfanges der Plattform (2) und des feststehenden Teiles (1) jeweils gelenkig mit diesen verbunden sind.

5. Vorrichtung nach einem der Ansprüche 2 bis 4, dadurch gekennzeichnet, daß das feststehende Teil (1) mittels an der einen Komponente (5) angebrachten Tragzapfen (6) gegenüber dieser drehsicher gehalten ist.

6. Vorrichtung nach einem der Ansprüche 1 bis 5, dadurch gekennzeichnet, daß die längenveränderbaren Elemente (7) Gasstellzylinder sind.

7. Vorrichtung nach einem der Ansprüche 1 bis 5, dadurch gekennzeichnet, daß die längenveränderbaren Elemente (7) Gasfederbälge (7) sind.

8. Vorrichtung nach Anspruch 6 oder 7, dadurch gekennzeich net, daß der Gasdruck in den längenveränderbaren Elementen (7) innerhalb vorgegebener oberer und unterer Schwellwerte auf einen konstanten Druck geregelt wird, der zum (stationären) Halten der Plattform (2) und der daran befestigten Komponente (4) erforderlich ist.

9. Vorrichtung nach einem der Ansprüche 2 bis 8, dadurch gekennzeichnet, daß der gemeinsame Schwerpunkt von Plattform (2) und zu verschraubender Komponente (4) in vertikaler Richtung unterhalb der Abstützpunkte der längenveränderlichen Elemente (7) angeordnet ist.

10. Vorrichtung nach einem der Ansprüche 1 bis 9, dadurch gekennzeichnet, daß der Drehantrieb (9) stufenlos regelbar ist.

11. Vorrichtung nach einem der Ansprüche 1 bis 10, gekennzeichnet durch einen Kugeldrehkranz (10), zur Verbindung der Plattform (2) mit einer drehbaren Aufnahme (3), an welcher die zu verschraubende Komponente (4) befestigt ist, wobei der Drehantrieb (9) die Aufnahme (3) gegenüber der Plattform (2) dreht.

12. Vorrichtung nach einem der Ansprüche 1 bis 11, dadurch gekennzeichnet, daß die Vorrichtung insgesamt mittels eines Aufhängepunktes bewegbar ist, sich an die jeweilige Komponente (5) selbsttätig ankoppelt und dort über eine Zentriereinrichtung (11) selbst zentriert.

Fig.1

EP 0 327 713 A2

EP 0 327 713 A2

Fig. 2